# EUROPEAN PATENT APPLICATION

(11) **EP 4 549 073 A2**
(43) Date of publication of application: **07.05.2025**
(21) Application number: 25165246.7
(22) Date of filing: 27.06.2024
(51) Int. Cl.: B23K 9/32

(54) **SYSTEMS AND METHODS TO CONTROL FUME EXTRACTION**

(30) Priority: 29.06.2023 US 202363511045 P; 21.06.2024 US 202418750696
(62) Divisional of application: 24185146.8
(71) Applicant: Illinois Tool Works Inc., Glenview IL 60025 (US)
(72) Inventor: ROBEY, Roger, Glenview, 60025 (US); MASSONET, Jesse, Glenview, 60025 (US); LEGG, Marshall, Glenview, 60025 (US); SOMMERS, Eric, Glenview, 60025 (US); KOPAC III, Jordan, Glenview, 60025 (US); MUSKE, Mitch, Glenview, 60025 (US)
(74) Representative: HGF

(57) **Abstract**

A fume extraction system is designed for metal working and other applications. The fume extraction system includes one or more motors to control fume suction airflow. The system copmrises first and second welding torches to perform welding operations on one or more workpieces. One or more hoses are connected to the first and second welding torches to channel the suction airflow from the workpiece to the fume extraction system. First and second valves control suction airflow through the one or more hoses. The first and second valves are between the first and second welding torches and the fume extraction system. The first and second valves are configured to adjust the suction airflow from the workpiece through a corresponding welding torch.

## Description

### CROSS REFERENCE TO RELATED APPLICATIONS

This application is a Non-Provisional Patent Application claiming priority to U.S. Provisional Patent Application No. 63/511,045 entitled "Systems And Methods To Control Fume Extraction" filed June 29, 2023, which is herein incorporated by reference in its entirety.

### BACKGROUND

A wide range of industrial, commercial, hobby and other applications result in airborne components that can be removed with proper extraction and filtering. Metal working operations, for example, range from cutting, welding, soldering, assembly, and other processes that may generate smoke and fumes. In smaller shops it may be convenient simply to open ambient air passages or to use suction or discharge air from fans to maintain air spaces relatively clear. In other applications, enclosed and/or cart-type fume extraction systems are used. In industrial settings, more complex fixed systems may be employed for extracting fumes from specific works cells, metal working locations, and so forth. In other settings, such as machine shops, woodworking shops, worksites where cutting, sanding and other operations are performed, dust, fumes, particulate and other types of airborne components may be generated that it may be desirable to collect and extract from work areas and controlled spaces.

A number of systems have been developed for fume extraction, and a certain number of these are currently in use. In general, these use suction air to draw fumes and smoke from the immediate vicinity of the metal working operation, and to filter the fumes and smoke before returning the air to the room or blowing the air to an outside space.

Further improvements are needed, however, in fume extraction systems. For example, it would be useful to be able to control suction at a given worksite based on user preferences and/or changing conditions to clean and/or remove fumes from the environment, thereby improving responsiveness and effectiveness of the extraction system.

### SUMMARY

The present disclosure provides improvements to conventional extractor designs. Example systems can automatically and/or manually control fume suction at one or more work stations, in response to sensor data, welding operation or type, and/or a user input. These and other features and advantages of the present invention will be apparent from the following detailed description, in conjunction with the appended claims.

### BRIEF DESCRIPTION OF THE DRAWINGS

The benefits and advantages of the present invention will become more readily apparent to those of ordinary skill in the relevant art after reviewing the following detailed description and accompanying drawings, wherein:
FIG. 1 illustrates an example fume extraction system, in accordance with aspects of this disclosure.
FIG. 2 is a diagram illustrating an example fume extraction system, in accordance with aspects of this disclosure.
FIG. 3 is a diagram illustrating an example fume extraction system, in accordance with aspects of this disclosure.
FIG. 4 provides a method of operating a fume extraction system, in accordance with aspects of this disclosure.
FIG. 5 provides a method of operating a fume extraction system, in accordance with aspects of this disclosure.

The figures are not necessarily to scale. Where appropriate, similar or identical reference numbers are used to refer to similar or identical components.

### DETAILED DESCRIPTION

Disclosed are systems and methods for fume extraction control. In particular, a fume extraction system, such as for a welding operation, includes one or more motors to control fume suction airflow. In some examples, a welding torch performs a welding operation on one or more workpieces, thereby creating fumes, debris, etc. One or more sensors (e.g., an optical camera, a laser scanner, a magnetic sensor, a heat sensor, a contact sensor, a voltage sensor, an accelerometer, an inertial measuring unit, etc.) may monitor a condition of the welding torch, such as movement, position, and/or orientation of the welding torch relative to the one or more workpieces. Control circuitry (e.g., associated with the fume extraction system) is operable to receive signals from the one or more sensors corresponding to movement, position, and/or orientation of the welding torch. The control circuitry can compare the sensor information to a list of welding torch positions corresponding to airflow conditions (e.g., stored in a local or networked database), to determine a desired suction airflow at the one or more workpieces. In some examples, the control circuitry can control a speed of the motor and/or a position of a valve to achieve the desired suction airflow. As a result, fumes and/or debris are efficiently and effectively collected and/or removed from the work environment.

Conventional fume extraction systems operate at a distance from the work environment, often resulting in a single, unchanging amount of suction during welding. As a welding operation progresses, however, the need for suction may change as a result. For instance, a welder may switch between welding tools, consumables, welding joints, welding speeds, workpieces, etc., each of which may benefit from different amounts of suction. For example, as the position or orientation of a welding torch changes relative to a workpiece (e.g., depending on a type of joint, etc.), shielding gas may be evacuated more or less easily. If too much or too little shielding gas is applied during welding, the quality of the weld may be compromised.

In disclosed examples, an amount of suction provided from a fume extraction system during a welding operation is controlled. Such control can be implement remotely and "on the fly" during a welding operation and/or in response to changing welding operations. For example, welding operations may employ fume extraction source capture systems, which include fume nozzles and/or fume extraction conduits/hoses on or near a tip of the welding torch. The fume nozzles are connected to a high speed, high flow fume extraction unit. However, certain welding positions/applications operate most effectively with different amounts of suction. In order to avoid evacuation of needed shielding gases (and avoid possible weld porosity issues stemming therefrom), the fume extraction system can be controlled, as disclosed herein.

In an example, the amount of suction is remotely adjusted during welding by controlling a speed of a variable-frequency drive (VFD) motor that provides negative airflow into the fume extraction system from the fume nozzle. In some examples, valving or other suitable devices can be controlled to adjust the suction flow for a given welding torch. In particular, multiple welding torches (e.g., equipped with source capture devices) can be connected to a single fume extraction unit (e.g., via a single hose or multiple hoses). The valves/adjustment devices can be controlled individually to control the suction flow at the point of welding, independent of any other welding torch/welding site.

Control circuitry can be incorporated within the fume extraction system, on the welding torch itself, an associated robot welding system, and/or with another related machine (e.g., a wire feeder, welding power source, remote control). Suction flow may be controlled by a computing platform or control circuitry, such as in response to a monitored condition (e.g., via one or more sensors) and/or based on one or more parameters of an associated welding system (e.g., power output, wire feed speed, etc.). Sensor data of the monitored conditions may be used to determine if an adjustment in suction flow is needed, provide an alert to an operator as to the changing conditions, and/or control an adjustment to the system automatically. Control can be automatic (e.g., in response to one or more conditions monitored by sensors,) and/or in response to a user input (e.g., an input via a trigger, knob, pedal, touchscreen, etc.).

Advantageously, the disclosed fume extraction systems can be incorporated with automated welding systems (e.g., robotic welders), and/or with manual welding torch applications as well.

In disclosed examples, a welding system includes a fume extraction system that includes a motor to control suction airflow; a welding torch to perform a welding operation on one or more workpieces; one or more sensors to monitor a position of the welding torch relative to the one or more workpieces; and control circuitry to receive signals from the one or more sensors corresponding to the position of the welding torch; compare the position of the welding torch to a list of welding torch positions corresponding to airflow conditions; determine a desired suction airflow at the one or more workpieces based on the comparison; and control a speed of the motor to achieve the desired suction airflow.

In some disclosed examples, a welding system includes a fume extraction system that includes a motor to create suction airflow; a welding torch to perform a welding operation on one or more workpieces; one or more sensors to monitor a position of the welding torch relative to the one or more workpieces; and control circuitry. The control circuitry is operable to receive signals from the one or more sensors corresponding to the position of the welding torch; determine the position of the welding torch based on the sensor data; determine a desired suction airflow at the one or more workpieces based on the sensor data; and control one or more components of the welding system to achieve the desired suction airflow.

In some examples, the list of welding torch positions includes airflow conditions corresponding to a position or orientation of the workpieces.

In examples, the list of welding torch positions includes airflow conditions for a plurality of welding joints. In examples, the plurality of welding joints includes a corner joint, a lap joint, a butt joint, an internal pipe joint, an external pipe joint, an edge joint, or a T-weld. In examples, the control circuitry is configured to adjust the speed of the motor by a first amount in response to a determination that the position of the welding torch corresponds to a first welding joint of the plurality of welding joints. In examples, the control circuitry is configured to adjust the speed of the motor by a second amount in response to a determination that the position of the welding torch corresponds to a second welding joint of the plurality of welding joints.

In some examples, the one or more sensors are further configured to monitor an orientation of the welding torch, a speed of the welding torch, a geometric arrangement of the one or more workpieces, or a type of weld being performed. In examples, the one or more sensors is one or more of an optical camera, a laser scanner, a magnetic sensor, a heat sensor, a contact sensor, or a voltage sensor.

In some examples, the system includes a communications channel to transmit information between the sensors or the control circuitry and the fume extraction system. In examples, the communications channel is one of a wired or wireless channel.

In examples, the system includes a robot welding arm to support and control movement of the welding torch.

In some disclosed examples, a welding system includes a fume extraction system that includes a motor to control suction airflow; first and second welding torches to perform welding operations on a workpiece; one or more hoses connected to the first and second welding torches to channel the suction airflow from the workpiece to the fume extraction system; and first and second valves to control suction airflow through the one or more hoses, the first and second valves arranged at the first and second welding torches, wherein the first and second valves are configured to adjust the suction airflow from the workpiece through a corresponding welding torch.

In some examples, the system includes first and second switches to control the first and second valves. In examples, the one or more switches is arranged on the welding torch and includes one or more of a thumbwheel, a dial, a toggle switch, a trigger, or a button, or arranged near the workpiece as a foot pedal. In examples, the first and second switches are configured to activate one or more actuators to adjust the first and second valves.

In some examples, the first or second switches are potentiometers.

In examples, the system includes a third welding torch to perform welding operations on another workpiece, the third welding torch connected to the one or more hoses and comprising a third valve. In examples, the third valve is configured to adjust the suction airflow from the workpiece through the third welding torch.

In some disclosed examples, a welding system includes a fume extraction system that includes a motor to create suction airflow; first and second welding torches to perform welding operations on one or more workpieces; one or more sensors to monitor suction airflow at the first and second welding torches; and control circuitry. The control circuitry is operable to receive signals from the one or more sensors corresponding to the suction airflow at the first welding torch; and control one or more components of the welding system to adjust the suction airflow at the second welding torch based on sensor data from the one or more sensors.

In some examples, the system includes first and second valves to control the suction airflow through one or more hoses at the first and second welding torches. The control circuitry is operable to control the second valve to adjust the suction airflow at the second welding torch based on the sensor data.

When introducing elements of various embodiments described below, the articles "a," "an," and "the" are intended to mean that there are one or more of the elements. The terms "comprising," "including," and "having" are intended to be inclusive and mean that there may be additional elements other than the listed elements. Moreover, while the term "exemplary" may be used herein in connection to certain examples of aspects or embodiments of the presently disclosed subject matter, it will be appreciated that these examples are illustrative in nature and that the term "exemplary" is not used herein to denote any preference or requirement with respect to a disclosed aspect or embodiment. Additionally, it should be understood that references to "one embodiment," "an embodiment," "some embodiments," and the like are not intended to be interpreted as excluding the existence of additional embodiments that also incorporate the disclosed features.

As used herein, the terms "coupled," "coupled to," and "coupled with," each mean a structural and/or electrical connection, whether attached, affixed, connected, joined, fastened, linked, and/or otherwise secured. As used herein, the term "attach" means to affix, couple, connect, join, fasten, link, and/or otherwise secure. As used herein, the term "connect" means to attach, affix, couple, join, fasten, link, and/or otherwise secure.

As used herein, the terms "first" and "second" may be used to enumerate different components or elements of the same type, and do not necessarily imply any particular order.

As used herein the terms "circuits" and "circuitry" refer to any analog and/or digital components, power and/or control elements, such as a microprocessor, digital signal processor (DSP), software, and the like, discrete and/or integrated components, or portions and/or combinations thereof, including physical electronic components (i.e., hardware) and any software and/or firmware ("code") which may configure the hardware, be executed by the hardware, and or otherwise be associated with the hardware. As used herein, for example, a particular processor and memory may comprise a first "circuit" when executing a first one or more lines of code and may comprise a second "circuit" when executing a second one or more lines of code. As utilized herein, circuitry is "operable" and/or "configured" to perform a function whenever the circuitry comprises the necessary hardware and/or code (if any is necessary) to perform the function, regardless of whether performance of the function is disabled or enabled (e.g., by a user-configurable setting, factory trim, etc.).

The terms "control circuit," "control circuitry," and/or "controller," as used herein, may include digital and/or analog circuitry, discrete and/or integrated circuitry, microprocessors, digital signal processors (DSPs), and/or other logic circuitry, and/or associated software, hardware, and/or firmware. Control circuits or control circuitry may be located on one or more circuit boards that form part or all of a controller.

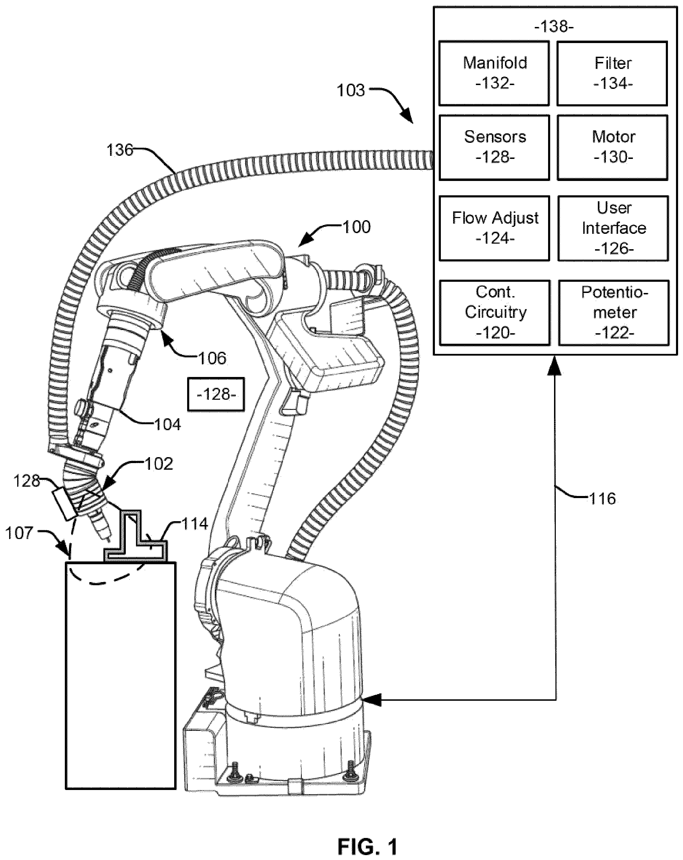

Turning now to the drawings, FIG. 1 illustrates a fume extraction system 103 for extracting airborne components, such as smoke, fumes, particulate matter, and more generally, workspace air as indicated by reference numeral 107 from a work area including a workpiece 114, with the fume extraction system 103 being incorporated with a welding system 100. In the illustrated embodiment, the fume extraction system 103 include one or more of a fume nozzle 102, a hose 136, and a fume extraction unit 138, which may include one or more of control circuitry 120, potentiometer 122, a flow adjustment device (e.g., valve, louver, etc.), a user interface 126 (e.g., touchscreen, control panel, etc.), one or more sensors 128, and/or a motor 130 (e.g., a fixed speed motor, a variable speed motor, a VFD, etc.). Various components (e.g., devices, circuits, motors, valves, louvers, actuators, robotic features, alerts, etc.) of the welding system can be controlled, engaged, activated, and/or manipulated to regulate airflow, from a given workstation and/or from a given torch. Further, the fume extraction unit 138 can include a manifold 132 into which the hose 136 connects, drawing the fumes into the manifold 132, which can be collected, filtered and/or removed via a filter 134.

The welding system 100 is a robotic welding system, with a robotic arm 106 to support and manipulate a welding torch 104. The welding system 100 is connected to the fume extraction unit 138 via a cable 116 (or other communications channel), to coordinate control between the welding system 100 and the fume extraction system 103.

In disclosed examples, operation of the fume extraction system 103 is integrated with the welding system 100. For example, one or more operating parameters of the welding system 100, such as welding or torch type, wire feed speed and/or power output, can be sent to the control circuitry 120 to adjust an amount of fume suction (e.g., by controlling speed of the motor 130).

Additionally or alternatively, one or more inputs from the sensors 128 can be used to inform control circuitry 120. For instance, one or more sensors can be arranged with the welding torch 104, the fume nozzle 102, with the fume extraction unit 138, and/or arranged within the work environment (e.g., mounted to the welding system 100, a wall, nearby equipment, etc.). The sensors 128 monitor characteristics of the welding environment, which can include movement, a position, and/or an orientation of the welding torch 104 (e.g., the contact tip) relative to one or more surfaces of the workpiece 114.

In particular, welding of a specific joint (e.g., a corner joint, a lap joint, a butt joint, an internal pipe joint, an external pipe joint, an edge joint, a T-weld, etc.) may benefit from tailored suction flow. Thus, the control circuitry 120 can receive signals from one or more of the sensors 128 (e.g., an optical camera, a laser scanner, a magnetic sensor, a heat sensor, a contact sensor, a voltage sensor, an accelerometer, an inertial measuring unit, an anemometer/airflow sensor, etc.), which can provide information corresponding to the position/orientation of the welding torch 104, relative to the geometric arrangement of surfaces of the workpiece. The control circuitry 120 compares the position/orientation information of the welding torch 104 to a list of welding torch positions corresponding to airflow conditions. The list can be stored in the control circuitry 120 (e.g., in a memory storage device), and/or can be stored in a remote device (e.g., remote database, computer, etc.), which can be accessed via a network interface. The list of welding torch positions/orientations includes airflow conditions corresponding to specific positions/orientations of the workpieces.

Based on the comparison, the control circuitry 120 determines a desired suction airflow, and control the motor 130 to change speed to achieve the desired suction airflow. For example, the speed of the motor can be adjusted by a first amount in response to a determination that the position of the welding torch corresponds to a first welding joint of the plurality of welding joints, and a second amount for a second welding joint. Additionally or alternatively, the control circuitry 120 can control a position of a flow adjust 124, which may be a valve or louver, and adjust a position of the valve or louver to achieve the desired suction airflow.

In some examples, the control circuitry 120 receives signals from the welding system 100 corresponding to the commanded position/speed/power output of the welder, and determines an amount of suction in response. These and other control signals can be sent via wired or wireless channels as a digital or analog signal.

In some examples, the motor 130 is a VFD motor configured to transmit an output over a range of values (e.g., 0-10 volts) to potentiometer 122. In some examples, the welding system 100 employs an analog card, transmitting analog control signals directly to the VFD motor, thereby bypassing the skip potentiometer. In some examples, the fume extraction system 138 includes a receptacle to receive an external input designated for remote control of the potentiometer 122.

It should be noted that the fume extraction system 103 can take any suitable configuration, including a stand-alone base unit, a cart-type unit, fixed or semi-fixed installations, such as those used in industrial, commercial, hobby, as a list of non-limiting examples. One or more components of the fume extraction system 103 may serve multiple welding torches, workspaces, work cells, weld cells, work locations and areas, and so forth, by separate and/or common conduits, which may provide positive-pressure air to and channel negative-pressure air and airborne components from the workspaces.

In some examples, the hose 136 can convey both a positive pressure or outgoing flow (negative pressure) and a return flow that may contain airborne components to be extracted from the work area. The hoses 136 may be adapted for rotation at one or more interfaces, such as between the nozzle 102 and/or the fume extraction unit 138. The hose 136 may rotate more or less than 360 degrees at each interface, although full multi-rotation capabilities may be designed into one or more joints between the hose 136, and/or the fume extraction system 138 (e.g., the flow adjustment device 124, the manifold 143, etc.).

Moreover, it is presently contemplated that the same principles of fluid dynamics and airborne component removal may be applied to "fluids" other than air or gasses (including liquids), and to that extent the teachings of the present disclosure are intended to extend to those applications.

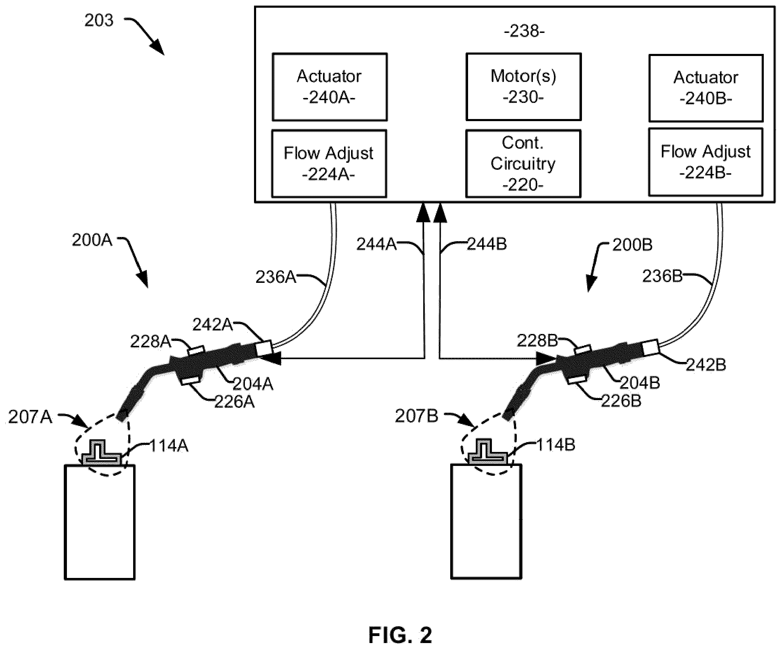

Turning now to FIG. 2, an example fume extraction system 203 supporting multiple welding systems 200A, 200B. The welding systems 200A, 200B include manually operated welding torches 204A, 204B connected to a common fume extraction unit 238 via fume hoses 236A, 236B, respectively, and configured for source capture via airflow 207A, 207B at respective workpieces 114A, 114B. The welding torches 204A, 204B are also connected to the fume extraction unit 238 via communication channels 244A, 244B (e.g., wired and/or wireless channels) to transmit control and informational signals between the torches and the unit (e.g., the control circuitry 220).

Each of the welding torches 204A, 204B can include one or more sensors 228A, 228B (e.g., an optical camera, a laser scanner, a magnetic sensor, a heat sensor, a contact sensor, a voltage sensor, an accelerometer, an inertial measuring unit, etc.) to monitor one or more welding conditions, one or more controls 226A, 226B (e.g., a thumbwheel, a dial, a toggle switch, a trigger, a foot pedal, a button, a touchscreen, etc.) to control an amount of suction airflow to the respective welding torch.

The fume extraction unit 238 can include control circuitry 220, one or more motors 230, and flow adjustment devices 224A and 224B to receive hoses 236A and 236B. The flow adjustment devices 224A and 224B can include valving and/or louvers, which can be adjusted manually, mechanically, and/or via control of actuators 240A and 240B (in response to a sensor and/or user input).

Additionally or alternatively, one or more hose adjustment devices 242A, 242B can be arranged on or near the welding torches 204A, 204B. For example, the hose adjustment devices 242A, 242B can be arranged at an interface or junction between the hoses 236A, 236B, and/or incorporated within the hose itself. In some examples, the welding torches 204A, 204B are connected to the fume extraction unit 238 by a single fume hose, with each torch employing a dedicated hose adjustment device.

In some examples, adjustment of the flow adjustment devices 224A, 224B and/or the hose adjustment devices 242A, 242B may be optimized for specific operations of the system (e.g., welding process, weld joint, etc.). Several different devices and/or techniques are presently contemplated for such adjustment and may include, for example, a bypass valve, a louver, or other mechanical device which may be adjusted to limit the flow of air from the fume extraction unit 238 and, consequently, the intake of air into the hoses 236A, 236B from the area 207A, 207B.

For example, user inputs may be provided via the controls 226A, 226B to control one or both adjustments, and/or data from sensors 228A, 228B corresponding to the welding operation. The inputs/data can be communicated to the control circuitry 220 to adjust flow adjustment devices 224A, 224B to regulate airflow (e.g., via adjustment to motors 230 and/or actuators 240A, 240B). In some examples, the user inputs and/or data from the sensors can directly control hose adjustment devices 242A, 242B to regulate airflow. Moreover, other and/or additional components and functionalities may be built into the system.

In some examples, airflow through one or more flow adjustment devices 224A, 224B and/or hose adjustment devices 242A, 242B can be monitored and compared. This can be implemented in a situation where airflow is changed at a first welding torch 204A as disclosed herein. Due to receiving negative airflow from common fume extraction unit 238, the change of airflow at the first welding torch 204A may cause a change in airflow at the second welding torch 204B. When any uncommanded change to airflow is found, the control circuitry 220 (or other device, such as a passive mechanical adjustment device), can cause an adjustment to a flow adjustment device associated with the impacted welding torch to ensure the desired airflow is maintained.

For instance, changes to airflow at one flow adjustment device and/or hose adjustment device can cause changes at another flow adjustment device and/or hose adjustment device. For example, when two hoses are connecting two torches to a single manifold, airflow changes limited to the first welding torch 204A (e.g., by flow adjustment device 224A and/or hose adjustment device 242A) will cause changes at the second welding torch 204B. In order to sustain a desired airflow at the second welding torch 204B, one or more system components (e.g., flow adjustment device 224B and/or hose adjustment device 242B) can be automatically controlled to compensate for the change in airflow resulting from the change at the first welding torch 204A. Such control can be implemented automatically, by the controller 202 in response to a sensor input, and/or via a mechanical response by a valve/louver tailored to maintain a selected airflow.

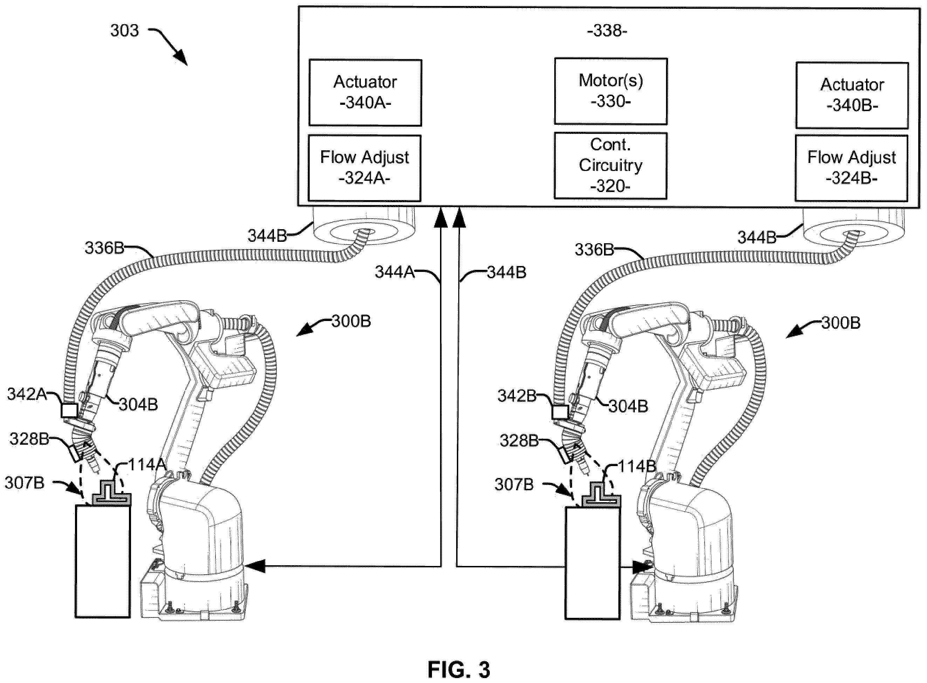

FIG. 3 illustrates an example fume extraction system 303, similar to fume extraction system 203, which supports multiple robotic welding systems 300A, 300B. The robotic welding systems 300A, 300B include robotic welding torches 304A, 304B connected to a common fume extraction unit 338 via fume hoses 336A, 336B, respectively, and configured for source capture via airflow 307A, 307B at respective workpieces 114A, 114B. The robotic welding torches 304A, 304B are also connected to the fume extraction unit 338 via communication channels 344A, 344B (e.g., wired and/or wireless channels) to transmit control and informational signals between the torches and the unit (e.g., the control circuitry 320).

Each of the robotic welding torches 304A, 304B can include one or more sensors 328A, 328B (e.g., an optical camera, a laser scanner, a magnetic sensor, a heat sensor, a contact sensor, a voltage sensor, an accelerometer, an inertial measuring unit, etc.) to monitor one or more welding conditions, one or more controls 326A, 326B (e.g., a thumbwheel, a dial, a toggle switch, a trigger, a foot pedal, a button, a touchscreen, etc.) to control an amount of suction airflow to the respective welding torch.

The fume extraction unit 338 can include control circuitry 320, one or more motors 330, and flow adjustment devices 324A and 324B to receive hoses 336A and 336B. The flow adjustment devices 324A and 324B can include valving and/or louvers, which can be adjusted manually, mechanically, and/or via control of actuators 340A and 340B (in response to a sensor and/or user input).

Additionally or alternatively, one or more hose adjustment devices 342A, 342B can be arranged on or near the robotic welding torches 304A, 304B. For example, the hose adjustment devices 342A, 342B can be arranged at an interface or junction between the hoses 336A, 336B, and/or incorporated within the hose itself. In some examples, the robotic welding torches 304A, 304B are connected to the fume extraction unit 338 by a single fume hose, with each torch employing a dedicated hose adjustment device.

In some examples, adjustment of the flow adjustment devices 324A, 324B and/or the hose adjustment devices 342A, 342B may be optimized for specific operations of the system (e.g., welding process, weld joint, etc.). Several different devices and/or techniques are presently contemplated for such adjustment and may include, for example, a bypass valve, a louver, or other mechanical device which may be adjusted to limit the flow of air from the fume extraction unit 338 and, consequently, the intake of air into the hoses 336A, 336B from the area 307A, 307B.

For example, user inputs may be provided via the controls 326A, 326B to control one or both adjustments, and/or data from sensors 328A, 328B corresponding to the welding operation. The inputs/data can be communicated to the control circuitry 320 to adjust flow adjustment devices 324A, 324B to regulate airflow (e.g., via adjustment to motors 330 and/or actuators 340A, 340B). In some examples, the user inputs and/or data from the sensors can directly control hose adjustment devices 342A, 342B to regulate airflow. Moreover, other and/or additional components and functionalities may be built into the system.

Although the example fume extraction systems 203, 303 of FIGS. 2 and 3 are illustrated as employing two torches (e.g., welding torches 204A, 204B and robotic welding torches 304A, 304B), the disclosed systems and controls can be implemented on a single welding torch, on three, four, five, six, seven, eight, nine, ten or more torches. Further, each connected torch may have one or more flow adjustment devices (e.g., hose adjustment devices 242A, 242B, 342A, and/or 342B, flow adjustment devices 224A, 224B, 324A and/or 324B), which may be the same or different from another connected torch.

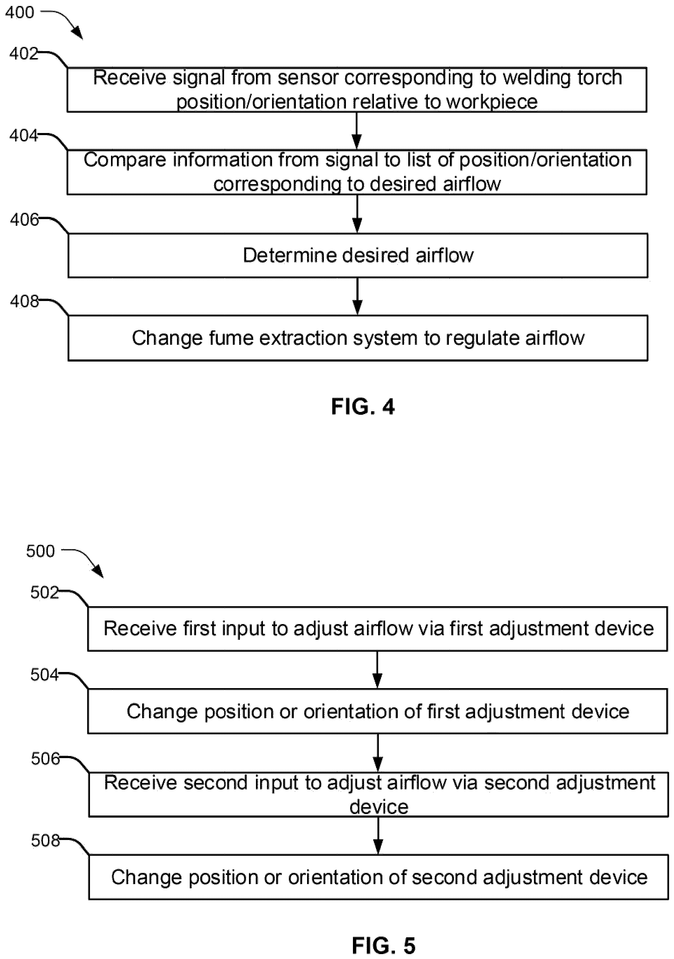

FIG. 4 illustrates a method of operating a fume extraction system, such as the fume extraction system 103 of FIG. 1. In block 402, control circuitry receives signals from one or more sensors, the signals corresponding to a position, orientation, or movement of a welding torch, such as relative to a position, shape, and/or arrangement of a welding joint or workpiece. At block 404, the position, orientation, or movement of the welding torch is compared to a list of welding torch positions, orientation, or movement corresponding to desired airflow conditions. At block 406 the control circuitry determines a desired suction airflow at the one or more workpieces based on the comparison. At block 408, the control circuitry controls the fume extraction system to regulate airflow at the workpiece. Regulation can include adjusting a speed of a suction motor and/or to adjust a position of a valve or louver to achieve the desired suction airflow.

FIG. 5 illustrates a method of operating a fume extraction system, such as the fume extraction systems 203 or 303 of FIGS. 2 and 3. In block 502, a first flow adjustment device (e.g., valve, louver) receives a first input to adjust in order to regulate airflow at a first welding torch. At block 504, a position or orientation of the first flow adjustment device is changed to achieve the desired airflow by a first amount. In block 506, a second flow adjustment device (e.g., valve, louver) receives a second input to adjust in order to regulate airflow at a second welding torch. At block 508, a position or orientation of the second flow adjustment device is changed to achieve the desired airflow by a second amount.

In some examples, the first or second inputs correspond to a user input via a control device, the user input indicating an amount of adjustment to the airflow and/or the respective flow adjustment device. In some examples, the first or second inputs correspond to an input via a sensor, the sensor input transmitted to control circuitry. The control circuitry being operable to control the flow adjustment device based on the sensor input to regulate an amount of airflow for the respective welding torch.

In some examples, original equipment or even retrofits for the disclosed fume extraction systems may be made to equipment such as shop vacuum systems, existing evacuation installations, and so forth. It is also contemplated that structures and teachings based on those set forth herein may be employed in specific settings to provide enhanced fume and airborne component collection.

As utilized herein, "and/or" means any one or more of the items in the list joined by "and/or". As an example, "x and/or y" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y and/or z" means "one or more of x, y and z". As utilized herein, the term "exemplary" means serving as a non-limiting example, instance, or illustration. As utilized herein, the terms "e.g.," and "for example" set off lists of one or more non-limiting examples, instances, or illustrations.

While the present method and/or system has been described with reference to certain implementations, it will be understood by those skilled in the art that various changes may be made and equivalents may be substituted without departing from the scope of the present method and/or system. In addition, many modifications may be made to adapt a particular situation or material to the teachings of the present disclosure without departing from its scope. For example, systems, blocks, and/or other components of disclosed examples may be combined, divided, re-arranged, and/or otherwise modified. Therefore, the present method and/or system are not limited to the particular implementations disclosed. Instead, the present method and/or system will include all implementations falling within the scope of the appended claims, both literally and under the doctrine of equivalents.
Certain embodiments of the invention are described in the following clauses:
Clause 1. A welding system comprising:
   a fume extraction system that includes a motor to create suction airflow;
   a welding torch to perform a welding operation on one or more workpieces;
   one or more sensors to monitor a position of the welding torch relative to the one or more workpieces; and
   control circuitry to:
      receive signals from the one or more sensors corresponding to the position of the welding torch;
      determine the position of the welding torch based on the sensor data;
      determine a desired suction airflow at the one or more workpieces based on the sensor data; and
      control one or more components of the welding system to achieve the desired suction airflow.
Clause 2. The system of clause 1, wherein the control circuitry is configured to access a list of welding torch positions corresponding to airflow conditions, the list of welding torch positions includes airflow conditions corresponding to a position or orientation of the workpieces.
Clause 3. The system of clause 2, wherein the list of welding torch positions includes airflow conditions for a plurality of welding joints.
Clause 4. The system of clause 3, wherein the plurality of welding joints includes a corner joint, a lap joint, a butt joint, an internal pipe joint, an external pipe joint, an edge joint, or a T-weld.
Clause 5. The system of clause 3, wherein the control circuitry is configured to adjust the speed of the motor by a first amount in response to a determination that the position of the welding torch corresponds to a first welding joint of the plurality of welding joints.
Clause 6. The system of clause 3, wherein the control circuitry is configured to adjust the speed of the motor by a second amount in response to a determination that the position of the welding torch corresponds to a second welding joint of the plurality of welding joints.
Clause 7. The system of clause 1, wherein the one or more sensors are further configured to monitor an orientation of the welding torch, a speed of the welding torch, a geometric arrangement of the one or more workpieces, or a type of weld being performed.
Clause 8. The system of clause 7, wherein the one or more sensors is one or more of an optical camera, a laser scanner, a magnetic sensor, a heat sensor, a contact sensor, an airflow sensor, an inertial measurement unit, or a voltage sensor.
Clause 9. The system of clause 1, further comprising a communications channel to transmit information between the sensors or the control circuitry and the fume extraction system.
Clause 10. The system of clause 9, wherein the communications channel is one of a wired or wireless channel.
Clause 11. The system of clause 1, further comprising a robot welding arm to support and control movement of the welding torch.
Clause 12. A welding system comprising:
   a fume extraction system that includes a motor to create suction airflow;
   first and second welding torches to perform welding operations on one or more workpieces;
   one or more hoses connected to the first and second welding torches to channel the suction airflow from the workpiece to the fume extraction system; and
   first and second valves to control suction airflow through the one or more hoses, the first and second valves between the first and second welding torches and the fume extraction system, wherein the first and second valves are configured to adjust the suction airflow from the workpiece through a corresponding welding torch.
Clause 13. The system of clause 12, further comprising first and second switches to control the first and second valves.
Clause 14. The system of clause 13, wherein the one or more switches is arranged on the welding torch and includes one or more of a thumbwheel, a dial, a toggle switch, a trigger, or a button, or arranged near the workpiece as a foot pedal.
Clause 15. The system of clause 13, wherein the first and second switches are configured to activate one or more actuators to adjust the first and second valves.
Clause 16. The system of clause 12, wherein the first or second switches are potentiometers.
Clause 17. The system of clause 12, further comprising a third welding torch to perform welding operations on another workpiece, the third welding torch connected to the one or more hoses and comprising a third valve.
Clause 18. The system of clause 17, wherein the third valve is configured to adjust the suction airflow from the workpiece through the third welding torch.
Clause 19. A welding system comprising:
   a fume extraction system that includes a motor to create suction airflow;
   first and second welding torches to perform welding operations on one or more workpieces;
   one or more sensors to monitor suction airflow at the first and second welding torches; and
   control circuitry to:
      receive signals from the one or more sensors corresponding to the suction airflow at the first welding torch; and
      control one or more components of the welding system to adjust the suction airflow at the second welding torch based on sensor data from the one or more sensors.
Clause 20. The system of clause 19, further comprising a valve to control the suction airflow through one or more hoses at the second welding torch,
   wherein the control circuitry is configured to control the second valve to adjust the suction airflow at the second welding torch based on the sensor data.

## Claims

1. A welding system comprising:
a fume extraction system that includes a motor to create suction airflow;
first and second welding torches to perform welding operations on one or more workpieces;
one or more hoses connected to the first and second welding torches to channel the suction airflow from the workpiece to the fume extraction system; and
first and second valves to control suction airflow through the one or more hoses, the first and second valves between the first and second welding torches and the fume extraction system, wherein the first and second valves are configured to adjust the suction airflow from the workpiece through a corresponding welding torch.

2. The system of claim 1, further comprising first and second switches to control the first and second valves.

3. The system of claim 2, wherein the one or more switches is arranged on the welding torch and includes one or more of a thumbwheel, a dial, a toggle switch, a trigger, or a button, or arranged near the workpiece as a foot pedal.

4. The system of claim 2,wherein the first and second switches are configured to activate one or more actuators to adjust the first and second valves.

5. The system of claim 1, wherein the first or second switches are potentiometers.

6. The system of claim **1,** further comprising a third welding torch to perform welding operations on another workpiece, the third welding torch connected to the one or more hoses and comprising a third valve.

7. The system of claim 6, wherein the third valve is configured to adjust the suction airflow from the workpiece through the third welding torch.

8. The system of claim **1,** comprising one or more sensors to monitor suction airflow at the first and second welding torches; and
control circuitry to:
receive signals from the one or more sensors corresponding to the suction airflow at the first welding torch; and
control the second valve adjust the suction airflow at the second welding torch based on sensor data from the one or more sensors.
